# EUROPEAN PATENT SPECIFICATION

(11) **EP 2 621 840 B1**
(45) Date of publication and mention of the grant of the patent: **04.03.2015**
(21) Application number: 11778697.0
(22) Date of filing: 30.09.2011
(51) Int. Cl.: B65G 57/18

(54) **STACKING MACHINE FOR STACKING METAL SECTIONS**
STAPELMASCHINE ZUR STAPELUNG VON METALLPROFILEN
MACHINE D'EMPILEMENT POUR EMPILER DES SEGMENTS DE MÉTAL

(30) Priority: 01.10.2010 IT MI20101809
(43) Date of publication of application: 07.08.2013
(73) Proprietor: Danieli & C. Officine Meccaniche, S.p.A., 33041 Buttrio (IT)
(72) Inventor: MOSCHIONI, Luciano, I-33050 Pavia di Udine (IT); PAOLONE, Rolando, I-33042 Buttrio (IT)
(74) Representative: Cinquantini, Bruno
(86) International application number: PCT/IB2011/054308
(87) International publication number: WO 2012/042504

(56) References cited:
- EP-A1- 0 009 037
- EP-A1- 0 099 863
- EP-A1- 0 511 481
- EP-A2- 0 819 631

## Description

### Field of the invention

The present invention relates to a stacking machine for forming stacks of metal sections, such as angular, C-shaped or T-shaped sections, but also suitable for double T-shaped, flat or rounded sections.

### Prior art

Various stacking machines are known for stacking metal sections, using rotating arms equipped with electromagnets or magnetic heads for gripping and moving layers of sections from a gripping position, provided on a transferring unit, to a delivery position at a device for forming a package of section layers, provided at one end of said transferring unit.

One example of a known stacking machine includes a plurality of rotating arms equipped with respective magnetic heads, associated rotationally with the arms, for the formation of a package of sections, such as V-shaped sections, formed from alternately arranged layers (at the front and back) so that the sections of a layer are embedded in the sections of the layer below, i.e. they position themselves in the hollows of the sections of the layer below.

Hydraulic means, associated with each rotating arm, permit the lifting of the rotating arm/magnetic head systems to position the magnetic heads, with the electromagnets facing upwards, in a gripping position beneath the first layer of sections to be moved, lying on said transferring unit.

First electromechanical means, associated with the rotating arms, permit the transmission of a first 180° rotation of the magnetic heads to match the first layer of sections, already magnetically joined to them, with a second layer of sections arranged further down the transferring unit. In this new position, the magnetic heads have the electromagnets facing downwards.

Second electromechanical means, associated with each rotating arm, permit a first translation of the rotating arm/magnetic head systems, once the double layer of sections has joined magnetically to the magnetic heads, towards the device for forming the package of section layers.

At this point, the above hydraulic means permit the lowering of the rotating arm/magnetic head systems to permit the delivery of the double layer of sections to the device for forming the package of layers.

Subsequently, the above first electromechanical means permit the transmission of a second 180° rotation, opposite to the first rotation, to the magnetic heads to make them leave the area inside the package forming device and the above second electromechanical means then permit a second translation, in the opposite direction to the first translation, of the rotating arm/magnetic head systems to bring back the magnetic heads, with the electromagnets facing upwards, to the gripping position again.

The operation of said stacking machine therefore requires at least three control means for moving the rotating arms and the magnetic heads from the section gripping position to the section delivery position in which at least one layer of sections is laid on the package forming device:
- a first control means for controlling the actuation of the above hydraulic means for raising or lowering the rotating arm-magnetic head systems;
- a second control means for controlling the actuation of the above first electromechanical means that permit the rotation, in both directions, of the magnetic heads around their own axis of rotation;
- a third control means for controlling the actuation of the above second electromechanical means that permit the translation forwards or backwards of the rotating arm/magnetic head systems, in particular through an oscillation, in one direction or another, of the rotating arms around a respective oscillation pin.

A first disadvantage of this solution is represented by the significant implementation costs of the mechanical part and the complexity of its automation; in particular, the synchronisation of the individual movements to perform a complete movement cycle is complex, and it is therefore particularly complex to manage the automation software of the stacking machine.

A second disadvantage of this solution is also represented by a high impact on civil works. For example, the significant height of the magnetic heads unit (more than 3 metres) means that the package being formed is located in an area that is difficult for an operator to access, for which reason it is necessary to provide a dedicated walkway.

Another example of a known stacking machine, corresponding to the preamble of claim 1, is described in the document EP0099863A1. Disadvantageously in this machine, a first transmission shaft, defining a first axis of rotation and on which the rotating arms are mounted, is positioned above the section feed plane of the transferring unit and is arranged between the transferring unit and the delivery position of the sections in which the sections are placed in the package forming device, i.e. between the front end of the transferring unit and the package forming device. Therefore, this arrangement has significant dimensions. In addition, second transmission shafts, defining second axes of rotation and on which the magnetic heads are mounted, are positioned within the movement radius of the rotating arms and the magnetic heads, resulting in greater mechanical complexity and more difficult maintenance access.

There is therefore a need to build a stacking machine that allows the above disadvantages to be overcome.

### Summary of the invention

The primary purpose of the present invention is to make a stacking machine for the formation of packages of metal sections that allows the simplification of the mechanical part, reducing construction costs, and at the same time making it easier to synchronise the movements of the individual components, thus making the management of the automation software of the stacking machine less complex.

Another purpose of the invention is to make a more compact stacking machine to reduce the dimensions and also to permit a reduction of the impact on civil works. A further purpose of the invention is to provide a related process for stacking metal sections in a more simple, quick and reliable way than the known processes.

The present invention therefore aims to achieve the purposes mentioned above by providing a stacking machine for the formation of packages of longitudinal metal sections, the machine comprising the features of claim 1.

A second aspect of the present invention provides for a process for forming a package of layers of longitudinal metal sections that can be carried out by means of the above-mentioned stacking machine, comprising the following steps:
a) arranging at least one layer of sections at said gripping station;
b) arranging the plurality of longitudinal arms in a substantially horizontal position and the plurality of magnetic gripping means with respective electromagnets facing upwards in a substantially horizontal position thereof under said at least one layer of sections;
c) carrying out a first rotation of approximately 180° of the magnetic means in a first direction of rotation, by means of a control provided by the second control means, for magnetically picking said at least one layer of sections from said gripping station and positioning the respective electromagnets facing downwards;
d) transmission of a first rotation of approximately 180° in a first direction of rotation to the arms by means of a control provided by the first control means for transferring said at least one layer of sections from said gripping station to said delivery station, wherein said first rotation of the arms is either subsequent to or simultaneous with said first rotation of the magnetic gripping means;
e) depositing said at least one layer of sections in a storage bag at said delivery station;
f) transmission of a second rotation of approximately 180° in a second direction of rotation, opposite to the first direction of rotation, to the magnetic means, by means of a control provided by the second control means, for extracting said magnetic means from the storage bag and repositioning the electromagnets facing upwards;
g) transmission of a second rotation of approximately 180° in said first direction of rotation to the arms by means of control provided by the first control means for repositioning the plurality of longitudinal arms in their substantially horizontal position and the plurality of magnetic means with the respective electromagnets in their first substantially horizontal position underneath a further at least one layer of sections to be stacked.

In particular, the stacking machine according to the present invention has the following advantages:
- Compared to the stacking machines described in the prior art, the number of movement controls of the rotating arms and the magnetic heads is reduced from three to two, permitting a simplification of the automation of the machine, having one less control to be managed and, in particular, to be synchronised with other controls to perform a complete cycle;
- A lower cost of implementation of the mechanical part compared to known machines;
- A reduced height of the magnetic heads unit, equal to about 1,5 metres, meaning that the package being formed is located in an area accessible to the operator, for which reason it is not necessary to provide a dedicated walkway;
- A high production rate without even minimal interruptions or shutdowns in the cycle of feeding and delivery of sections, due to the coordination of the process steps; in particular, the stacking times when moving a double layer of sections up to delivery of the package forming device, with a front layer and a back layer that are coupled on the magnetic heads, are less than or equal to approx. 14 seconds. The stacking machine, object of the present invention, is also highly flexible in that it permits operation in the following ways:
- Preparation of a package of layers arranged alternately to each other (front and back) so that the "N-1" sections of one layer are fitted into the "N" sections of the adjacent layer below, by means of the coupling of two layers of sections directly on the magnetic heads and the subsequent delivery of a double layer of sections into the storage bag for each operating cycle of the machine; this first mode applies to lightweight and thin sections, such as V-shaped sections, for which the indirect magnetism that passes into the first layer of sections already attached to the magnet is also sufficient to support the second layer below;
- Preparation of a package of layers arranged alternately to each other (front and back) so that the "N-1" sections of one layer are fitted into the "N" sections of the adjacent layer, by means of the gripping of a single layer of sections by the magnetic heads and the subsequent delivery of a single layer of sections into the storage bag; this second mode applies to heavy and thick sections, for which the indirect magnetism that passes into one layer of sections already attached to the magnet is not sufficient to also support a second layer;
- Preparation of a package of layers of round or flat sections of high thickness or with a double T-shape, by means of the simple stacking of layers equal to each other, carried out by gripping a single layer of sections by the magnetic heads and subsequent delivery of a single layer of sections into the storage bag in each operating cycle of the machine; this third mode is valid for sections that do not have to rotate alternately to create a package with a high fill factor, for which the indirect magnetism that passes over the layer of sections already attached to the magnet is not sufficient to also support a second layer.

The dependent claims describe preferred embodiments of the invention.

### Brief description of the figures

Further characteristics as well as further advantages of the present invention will become apparent from the following detailed description of a preferred, but not exclusive, embodiment of a stacking machine, as shown in the annexed drawings, which are supplied by way of non-limiting example, wherein:
Fig. 1 represents a first variant of the machine according to the invention in a first operating step;
Fig. 2 represents the machine of Fig. 1 in a second operating step;
Fig. 3 represents the machine of Fig. 1 in a third operating step;
Fig. 4 represents the machine of Fig. 1 in a fourth operating step;
Fig. 5 represents the machine of Fig. 1 in a fifth operating step;
Fig. 6 represents the machine of Fig. 1 in a sixth operating step;
Fig. 7a represents a second variant of the machine according to the invention;
Fig. 7b represents a third variant of the machine according to the invention;
Fig. 7c represents a fourth variant of the machine according to the invention.

The same reference numbers in the figures identify the same elements or components.

### Detailed description of preferred embodiments of the invention

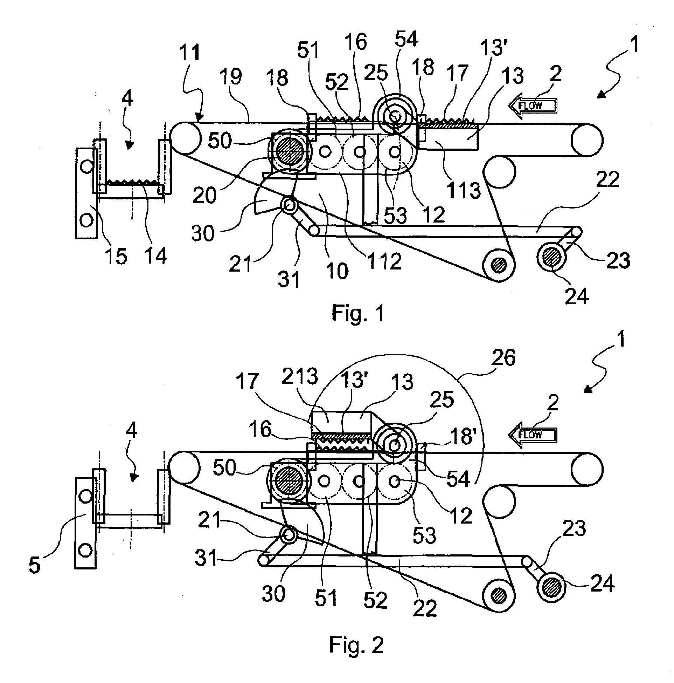

With reference to Figures 1 to 6, they represent an embodiment of a stacking machine for stacking sections, globally indicated with reference number 1.

The stacking machine. object of the present invention, comprises:
- a transferring unit 11 subdivided into parallel longitudinal portions, each longitudinal portion comprising a chain 19, or alternatively a tape, which permit the feeding of layers of longitudinal sections arranged transversely to the longitudinal extension of said chains 19, i.e. transversely to the feed direction of the transferring unit, indicated by the arrow 2;
- a gripping station for gripping layers of sections, provided in an area of the transferring unit 11, comprising at least two series of separator stops 18, 18'; a first series of stops 18', each arranged between two chains 19 of the transferring unit 11, being parallel and appropriately spaced along the longitudinal extension of the chains 19 with respect to a second series of stops 18, each of the latter also arranged between two chains 19;
- a plurality of rotating arms 12, suited to rotating about the same first axis of rotation, each arranged between two chains 19 of the transferring unit 11;
- a plurality of magnetic means 13, known in technical jargon as magnetic heads, each magnetic head 13 being fixed rotationally to one end of a respective rotating arm 12, said magnetic heads 13 being suited to rotating around the same second axis of rotation;
- a delivery station for delivering layers of sections comprising a mobile carriage 15 equipped with a storage bag for layers of sections for the formation of a predetermined package of layers of sections, said carriage 15 being arranged at one end 3 of the transferring unit 11.

It may also be provided a device known as a detacher, which is actuated to facilitate the separation of the sections from the electromagnets 13' of the magnetic heads 13, once the latter are in the position for delivery of the sections at said storage bag.

The rotating arms 12 are mounted solidly to a single transmission shaft 20, defining said first axis of rotation.

A first control means controls the actuation of the transmission shaft 20 which transmits, during the operation of the machine, a rotation in a single direction of rotation to the plurality of rotating arms 12. Said first control means comprises, for example, an electric or hydraulic motor.

Advantageously, the transmission shaft 20 is positioned below the section feed plane of the transferring unit 11 and the size and substantially L-shaped form of the rotating arms 12 is such that, in the gripping position 112 (Fig. 1) of a layer 17 of sections, delimited by the separator stops 18', the short L-shaped stretch of the arms 12 protrudes from said feed plane at the separator stops 18' in a free area between said layer 17, arranged upstream, and a possible additional layer 16 of sections, arranged downstream and delimited by separator stops 18, without however interfering with the layers 16, 17 of sections arranged on the transferring unit 11 that are waiting to be magnetically coupled by means of the magnetic heads 13.

Advantageously, the transmission shaft 20 is arranged in an intermediate position between the front end 3 and the back end of the transferring unit 11 and the distance between the axis of rotation of the transmission shaft 20 and the front end 3 of the transferring unit 11 is substantially equal to the length of the long stretch of the L-shape of the rotating arms 12.

A further advantage is represented by the fact that the delivery station, comprising the mobile carriage 15 equipped with a storage bag, is positioned adjacent to the front end 3 of the transferring unit 11, as a result of which the overall dimensions of the stacking machine are further reduced.

The magnetic heads 13 are fixed rotationally to the end of the respective rotating arms 12 at the short stretch of the L-shape. In particular, the magnetic heads 13 are mounted solidly to the respective rotating axles 25, positioned transversely on the arms 12 and defining said second axis of rotation that can therefore rotate around the first axis of rotation of the transmission shaft 20.

A second control means controls the actuation of a single transmission shaft 24 that can transmit, during the operation of the machine, a rotation in one direction or the other to the plurality of magnetic heads 13 around said second axis of rotation, by means of appropriate kinematics. Said second control means comprises, for example, an electric or hydraulic motor or a Cardan shaft actuated in turn by a motor either in direct coupling or by means of a rod/crank mechanism to ensure the precision and execution speed of the rotation of the magnetic heads. Advantageously, the transmission shaft 24 is positioned outside of the radius of action of the rotating arms 12 and the magnetic heads 13. This prevents any kind of interference, allowing a single control to be provided for all of the magnetic heads 13.

According to a first advantageous variant, the connection kinematics between the transmission shaft 24 and each rotating axle 25 comprise:
- a lever or crank 23 mounted solidly on the shaft 24;
- a bar or rod 22, connected at its first end to the crank 23;
- a further lever 31 connected at its first end to a second end of the bar or rod 22 and provided at a second end with a fulcrum 21 to which is solidly pivoted a circular sector-shaped element 30 provided with a toothed edge;
- a series of idle toothed wheels, engaging with each other in succession, on each rotating arm 12; the first toothed wheel 50 of said series of idle wheels is centred on the transmission shaft 20, but disengaged from it, and engages with the toothed edge of the circular sector element or lever 30, while the last toothed wheel 54 of said series of idle wheels is solidly centred on the axle 25, being able to transmit a rotational motion to the latter and therefore to the magnetic heads 13. Once the transmission shaft 24 is actuated, the circular sector lever 30 transmits a rotation to the first toothed wheel 50 of the arm 12 which, through one or more intermediate toothed wheels, is transmitted to the last toothed wheel 54. In the example shown in Figures 1 to 6, there are three intermediate toothed wheels 51, 52, 53. Advantageously, the dimensions of the toothed wheels 50, 51, 52, 53, 54 are contained in the L-shaped area of the arms 12.

In anticipation of the need to transmit rotations, in one direction or the other, of approx. 180° to the magnetic heads 13, there is advantageously a transmission ratio between the circular sector lever 30 and the toothed wheel 50 greater than 1, so that it is necessary to have a rotation only by an angle much smaller than 180° for the transmission shaft 24.

In the example shown in Figures 1 to 6, it can be seen that it is sufficient to have a rotation of the transmission shaft 24, and therefore of the crank 23 and the lever 31, of less than approx. 90° - 100° to obtain a rotation of approximately 180° in the magnetic heads 13. Advantageously, this feature permits a simplification of the overall mechanical design of the machine according to the invention. In fact, providing a rotation of the linkage 23-31 with an angular width greater than 100° would make it extremely complex and difficult to control the magnetic heads 13 centrally by means of the transmission shaft 24 in cooperation with the levers 23 and the rods 22. In this case, you would disadvantageously have to provide for single control means for each magnetic head 13, acting on the fulcra 21, which must be synchronised with each other.

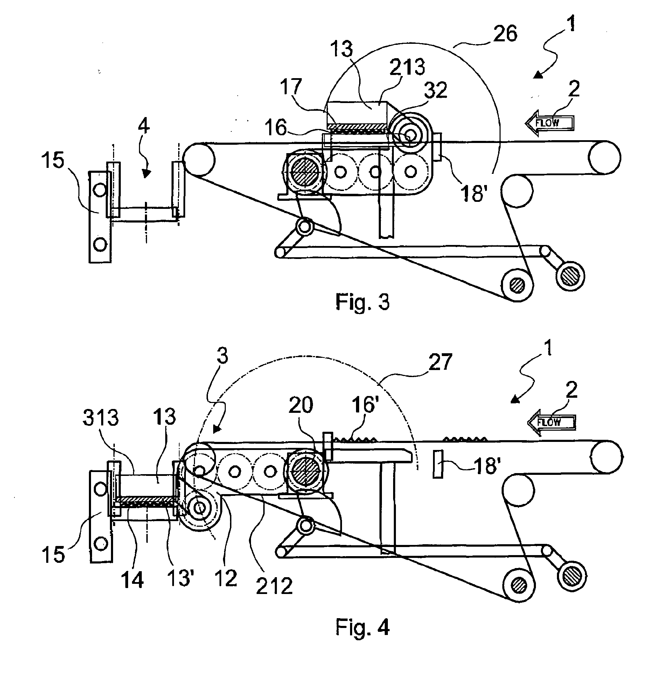

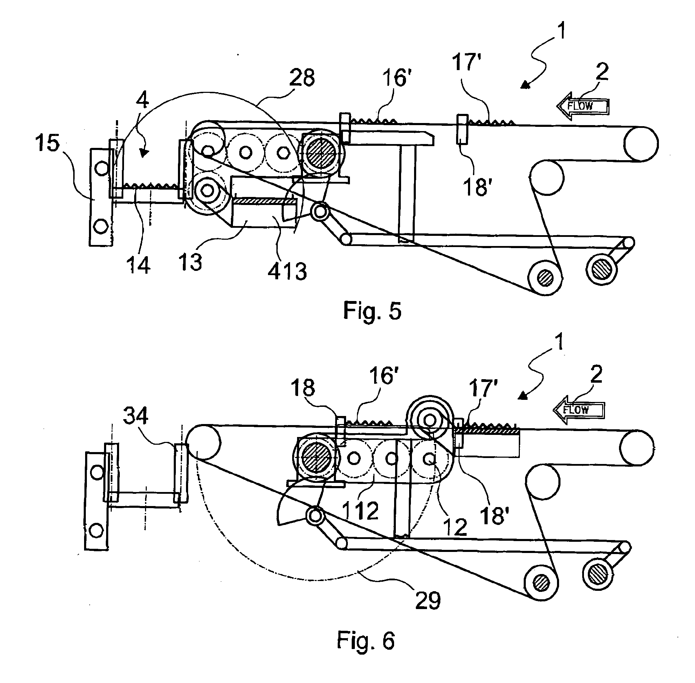

A further advantage is represented by the fact that the transmission ratio of the gearing comprising the toothed wheels 50-54, provided on the rotating arms 12, is equal to 1. This permits the obtainment, in the process steps in which the rotating arms 12 rotate 180° from the gripping position of the sections on the transferring unit 11 to the delivery position of the sections into the storage bag of the mobile carriage 15 and vice versa (see passage from Fig. 3 to Fig. 4 and from Fig. 5 to Fig. 6), of an equal and opposite rotation of the rotating axles 25, and therefore of the magnetic heads 13, around the second axis of rotation such that the electromagnets 13' of magnetic heads 13 remain in a horizontal position and always facing in the same direction (downwards in the passage from Fig. 3 to Fig. 4 and upwards in the passage from Fig. 5 to Fig. 6). This is achieved thanks to the fact that, during these steps, the transmission shaft 24 remains locked and, thus, the first toothed wheel 50 is locked by the circular sector lever 30 while the other toothed wheels 51, 52, 53, 54 tend to rotate, thus transmitting to the axles 25, and hence to the magnetic heads 13, a rotation opposite to that of the rotating arms 12.

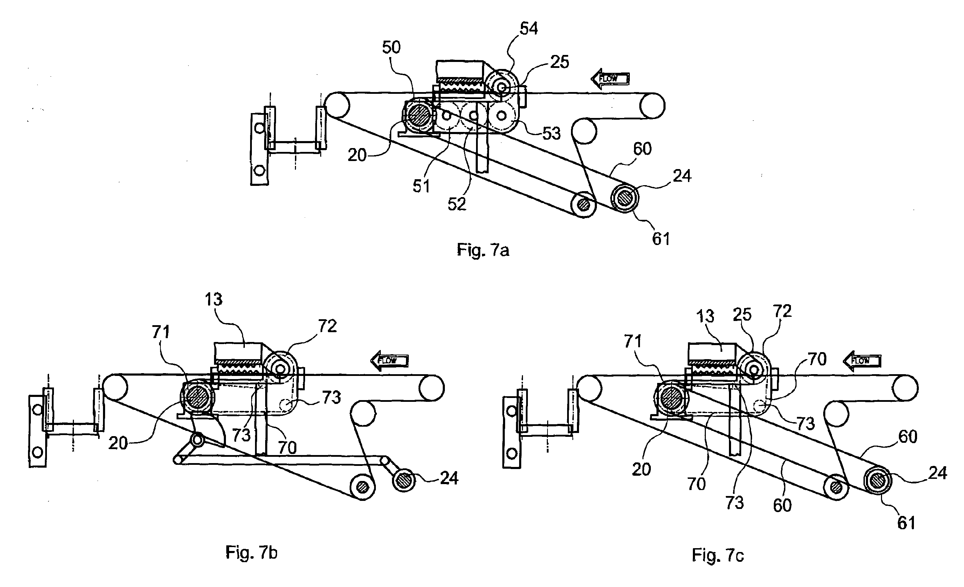

In a second advantageous variant, as shown in Fig. 7a, the kinematics of connection between the transmission shaft 24 and each rotating axle 25 comprise chains or toothed belts 60 for the transmission of motion directly from a series of pulleys 61, centred solidly on the transmission shaft 24, to the respective first toothed wheels 50 of the arms 12 idly centred on the transmission shaft 20.

In the first variant, it is possible to provide on the rotating arms 12, as an alternative to the gearing comprising the idle toothed wheels 50-54, means of transmission using chains or toothed belts 70 (Fig. 7b) engaging the toothed edge of the circular sector element or lever 30 to transmit motion directly between the first pulleys 71, centred idly on the transmission shaft 20, and the second pulley 72 mounted solidly on the axles 25 of the magnetic heads 13. This alternative solution is illustrated in Fig. 7b.

Similarly, in the second variant, it is possible to provide on the rotating arms 12, as an alternative to the gearing comprising the idle toothed wheels 50-54, pulleys 71 idly centred on the transmission shaft 20, on which are provided means of transmission using chains or toothed belts 70 to transmit motion directly between said pulleys 71 and additional pulleys 72 mounted solidly on the rotating axles 25 of the magnetic heads 13. This alternative solution is illustrated in Fig. 7c. The pulleys 71 and pulleys 61 are connected by means of the chains or toothed belts 60.

The transmission ratio of said means of transmission using chains or toothed belts 70 is equal to 1. Between the pulleys 71 and the pulleys 72, there are idle wheels 73 provided at the internal and external corners of the elbow of the L-shape of the arms 12, so that the dimensions of the chains or toothed belts 70 is advantageously contained in the L-shaped area of the arms 12.

Below is a description of a first operating cycle of the stacking machine according to the present invention, with reference to Figures 1 to 6. This first cycle refers to the gripping by the transferring unit 11 and the delivery to the storage bag of a double layer of metal sections, for example with V-shaped cross-section.

A plurality of sections is fed, according to the direction of arrow 2, to the transferring unit 11 so as to create a layer 16 of N sections, which is stopped at the disappearing separator stops 18, and a further layer 17 of N-1 sections, which is stopped at the further disappearing separator stops 18'.

After preparing the two layers 16, 17 at the separator stops 18, 18', the rotating arms 12 and their respective magnetic heads 13 are positioned as shown in Fig. 1. The position of the rotating arms 12 is shown by reference number 112, while the position of the magnetic heads 13 is shown by reference number 113. The long stretch of the L-shape of the arms 12 is substantially horizontal, while the short arm protrudes from the feed plane of the transferring unit without interfering between the two layers of sections 16, 17, in an intermediate area between the latter. The magnetic heads 13 are in a substantially horizontal position, just above said feed plane, with the electromagnets 13' facing upwards and at the layer 17 of sections arranged upstream. Therefore, the layer 17 of sections in this position is slightly raised above the feed plane of the transferring unit, i.e. compared to the plane tangent to the chains 19 of the transferring unit 11.

A first step (from Fig. 1 to Fig. 2) provides for the actuation of the transmission shaft 24 by the second control means so as to transmit a rotation of approx. 180°, in a first direction of rotation, to the magnetic heads 13 using the connection kinematics between the transmission shaft 24 and each rotating axle 25, as described above. In this way, the magnetic heads 13 pass from the gripping position 113 of layer 17 (Fig.1) to position 213 by following the path 26, shown in Fig. 2, to couple the layer 17 upside down to the layer 16. Position 213 is therefore defined as the coupling position.

In this first step, the magnetic heads 13 raise from the bottom the layer 17 of N-1 sections from the feed plane of the transferring unit 11 and invert it by rotating it from upstream to downstream in the feed direction according to arrow 2. Layer 17 is therefore to be placed just above layer 16 of N sections delimited by the separator stops 18.

A second step (from Fig. 2 to Fig. 3) provides for the actuation of an elevator 32, that can be actuated by means of a pneumatic or hydraulic cylinder (not shown), which permits the rapid raising of the layer 16 of N sections, delimited by the separator stops 18, to facilitate a perfect coupling of layers 16 and 17 on the electromagnets 13' of the magnetic heads 13. The N-1 sections of the layer 17 are to be placed in the hollows of the N sections of layer 16. The action of the elevator 32, which rapidly brings the sections or bars to the electromagnets 13', prevents a lifting of the sections solely due to magnetic attraction from moving them along their longitudinal extension, which would affect the correct positioning of the sections in the package being formed.

A third step (from Fig. 3 to Fig. 4) provides for the actuation of the transmission shaft 20 by the first control means so as to transmit a rotation of approx. 180° to the rotating arms 12 that pass from the gripping position 112 to the delivery position 212 of the sections into the storage bag 4, following the path 27 (Fig. 4). Since the distance between the axis of rotation of the transmission shaft 20 and the front end 3 of the transferring unit 11 is substantially equal to the length of the stretch of the L-shape of the rotating arms 12, passing from the gripping position 112 to the delivery position 212, the rotating arms 12 will have their short arm of the L-shape substantially adjacent to one longitudinal side wall of the storage bag 4 and the magnetic heads 13, thanks to the equal and opposite rotation of the rotating axles 25 compared to that of the arms 12, and will have their electromagnets 13' still in a horizontal position and always facing downwards. This counter-rotation of the magnetic heads 13, carrying the double layer 14 of sections, prevents any interference with the transferring unit 11 and the arrangement of the magnetic heads 13 in a substantially horizontal delivery position 313, with the double layer 14 of sections attached to them, facing downwards at the bottom of the storage bag 4.

At this point, the magnetic heads 13 are demagnetised to permit the delivery of the double layer 14 of sections to the bag 4. In this step, it is also possible to provide for the intervention of a detacher device (not shown) to facilitate the separation of the double layer 14 of sections from the electromagnets 13'.

Once this first double layer of sections has been deposited in the storage bag 4, the mobile carriage 15 will move downwards by a predetermined length substantially equal to the height of the double layer of sections deposited on the package being formed.

A fourth step (from Fig. 4 to Fig. 5) provides for the actuation of the transmission shaft 24 by the second control means so as to transmit a rotation of approx. 180°, in a second direction of rotation opposite to the first direction of rotation of the first step, to the magnetic heads 13 by means of the connection kinematics between the transmission shaft 24 and each rotating axle 25. In this way, the magnetic heads 13 pass from the delivery position 313 of the double layer 14 (Fig. 4) to the position 413 by following the path 28, shown in Fig. 5, leaving the storage bag 4 and thus preventing any interference with the package being formed in the bag and with a new layer 16' of sections being formed on the chains 19. At position 413, the magnetic heads 13 are in a horizontal position with the electromagnets 13' facing upwards.

A fifth step (from Fig. 5 to Fig. 6) provides for the actuation of the transmission shaft 20 by the first control means so as to transmit a further rotation of approx. 180° to the rotating arms 12, again in the same direction of rotation provided for in the third step, that pass from the delivery position 212 to the gripping position 112, following the path 29 (Fig. 6).

Passing from the delivery position 212 to the gripping position 112, the rotating arms 12 will have their short arm of the L-shape substantially adjacent to the separator stops 18' in their layer stop position (Fig. 6) and the magnetic heads 13, thanks to the equal and opposite rotation of the rotating axles 25 compared to the rotation of the arms 12, will have their electromagnets 13' still in a horizontal position and always facing upwards. This counter-rotation of the magnetic heads 13 permits the arrangement of the magnetic heads 13 again into the substantially horizontal gripping position 113, below a new layer 17' of N-1 sections that, in the meantime (Figures 4 and 5), has been fed together with a new layer 16' of N sections. These new layers 16', 17' have also been stopped at the separator stops 18 and the separator stops 18' respectively.

Advantageously, the rotation in a single direction of rotation of the rotating arms 12 permits these arms 12 to be actuated even during the feeding of two successive layers of sections 16', 17' on the transferring unit 11 towards the stop position of the respective separator stops 18, 18'. In fact, in this fifth process step, a possible rotation of the arms 12, until they reach a gripping position below the feed plane of the transferring unit 11, in the opposite direction to their rotation that occurs in the third step, should take place before feeding the two new layers 16', 17' to prevent interference between the arms and the layers of sections being fed.

In the event that the new layer 17' has not yet arrived at the separator stops 18', there is a provision for a temporary stop of the rotation of the rotating arms 12, from the delivery position 212 to the gripping position 112, in an area that is however proximal to said gripping position 112. For example, the rotating arms can be stopped at an angular distance of approx. 10-20° from the feed plane of the transferring unit 11. Once the new layer 17' has arrived at the separator stops 18', the rotation of the arms 12 resumes until they reach the gripping position 112.

At this point, further new operating cycles occur, with the gripping and the delivery of additional double layers of sections in the storage bag 4 until the complete formation of a predetermined package of sections.

A second operating cycle (not shown) of the stacking machine according to the present invention relates to the gripping by the transferring unit 11 and the delivery to the storage bag 4 of a layer of sections at one time, such as V-shaped sections, to create in said bag a package of layers arranged alternately with each other (front and back) so that the "N-1" sections of a layer are embedded in the "N" sections of the adjacent layer.

In this case, a single layer of N sections is fed and stopped at the disappearing separator stops 18. The rotating arms 12 and their respective magnetic heads 13 are positioned as shown in Fig. 1.

A first step provides for the actuation of the transmission shaft 24 by the second control means so as to transmit a rotation of approx. 180°, in a first direction of rotation, to the magnetic heads 13 using the connection kinematics between the transmission shaft 24 and each rotating axle 25. In this way, the magnetic heads 13 pass from position 113 to position 213 to magnetically pick up the layer of N sections at the stops 18.

A second step provides for the actuation of an elevator 32, to be actuated by a pneumatic or hydraulic cylinder that permits the rapid raising of the layer of N sections, delimited by the stop separators 18, to facilitate the gripping of the layer of N sections by the electromagnets 13' of the magnetic heads 13.

A third step provides for the actuation of the transmission shaft 20 by the first control means so as to transmit a rotation of approx. 180° to the rotating arms 12 that pass from the gripping position 112 to the delivery position 212 of the sections into the storage bag 4. As described above, the magnetic heads 13 pass from position 213 to position 313.

At this point, the magnetic heads 13 are demagnetised to permit the delivery of the layer of N sections to the bag 4. In this step, it is also possible to provide for the intervention of a detacher device (not shown) to facilitate the separation of the layer of N sections from the electromagnets 13'.

Once this first layer of N sections has been deposited in the storage bag 4, the mobile carriage 15 will move downwards by a predetermined length substantially equal to the height of said first layer deposited on the package being formed.

A fourth step provides for the actuation of the transmission shaft 24 by the second control means so as to transmit a rotation of approx. 180°, in a second direction of rotation opposite to the first direction of rotation of the first step, to the magnetic heads 13 using the connection kinematics between the transmission shaft 24 and each rotating axle 25. In this way, the magnetic heads 13 pass from the delivery position 313 to position 413, leaving the storage bag 4 and preventing any interference with the package being formed in the bag. In position 413, the magnetic heads 13 are in a horizontal position with the electromagnets 13' facing upwards.

A fifth step provides for the actuation of the transmission shaft 20 by the first control means so as to transmit a further rotation of approx. 180° to the rotating arms 12, still in the same direction of rotation already provided in the third step, which pass from the delivery position 212 again to the gripping position 112. As described above, the counter-rotation of the magnetic heads 13 permits the arrangement of the magnetic heads 13 again in the substantially horizontal position 113, below a new layer of N-1 sections that, in the mean time, has been fed and stopped at the separator stops 18', i.e. at position 113 of the magnetic heads 13.

At this point, the rotation of the above-mentioned third step is performed so that the arms 12 pass from position 112 to position 212 while the magnetic heads 13 pass directly from position 113 to position 313.

The magnetic heads 13 are then demagnetised to permit the delivery of the layer of N-1 sections to the bag 4, in which the N-1 sections are to be placed in the hollows of the N sections of the first layer already deposited.

The cycle ends with the repetition of the above-mentioned fourth step and fifth step so that the magnetic heads 13 pass from position 113 to position 413 and subsequently to position 113, while the arms 12 move from position 212 to position 112.

At this point, further new operating cycles occur, with the gripping and the delivery of additional single layers of sections in the storage bag 4 until the complete formation of a predetermined package of sections.

A third operating cycle (not shown) of the stacking machine according to the present invention relates to the gripping by the transferring unit 11 and the delivery to the storage bag 4 of a layer of sections at one time, such as round or flat sections of high thickness or with a double T-shape, to create in said bag a package of layers of sections by means of the simple stacking of layers equal to each other, without the need to alternately rotate the layers to create a package with a high fill factor.

In this case, a single layer of N sections is fed and stopped at the disappearing separator stop 18'. The rotating arms 12 and their magnetic heads 13 are positioned as shown in Fig. 1.

A first step provides for the actuation of the transmission shaft 20 by the first control means so as to transmit a rotation of approx. 180° to the rotating arms 12 in the same direction of rotation. In this way, the arms 12 pass from the gripping position 112 to the delivery position 212 of the sections into the storage bag while the magnetic heads 13 pass directly from position 113 to the delivery position 313. At this point, the magnetic heads 13 are demagnetised to permit the delivery of the layer of N sections to the bag 4. This step can also provide for the intervention of a detacher device to facilitate the separation of the layer of N sections from the electromagnets 13'. Once this first layer of N sections has been deposited in the storage bag 4, the mobile carriage 15 will move downwards by a predetermined length substantially equal to the height of said first layer deposited on the package being formed.

A second step provides for the actuation of the transmission shaft 24 by the second control means so as to transmit a rotation of approx. 180°, in a clockwise direction, to the magnetic heads 13 using the connection kinematics between the transmission shaft 24 and each rotating axle 25. In this way, the magnetic heads 13 pass from the delivery position 313 to position 413, leaving the storage bag 4 and preventing any interference with the package being formed in the bag. In position 413, the magnetic heads 13 are in a horizontal position with the electromagnets 13' facing upwards.

A third step provides for the actuation of the transmission shaft 20 by the first control means so as to transmit a further rotation of approx. 180° to the rotating arms 12, still in the same direction of rotation already provided in the first step, which pass from the delivery position 212 again to the gripping position 112. As described above, the counter-rotation of the magnetic heads 13 permits the arrangement of the magnetic heads 13 back in the substantially horizontal position 113, below a new layer of N sections that, in the mean time, has been fed and stopped at the separator stops 18'.

At this point, further new operating cycles occur, with the gripping and the delivery of additional single layers of sections in the storage bag 4 until the complete formation of a predetermined package of sections.

The length, the particular structural shape of the rotating arms 12 and their rotation in successive steps in the same direction, together with an appropriate distance between the axis of rotation of the arms 12 and the front end 3 of the transferring unit 11, permits a correct operation of the stacking machine according to the present invention by means of the advantageous use of only two control means of the rotating arms and the magnetic heads, which are easy to synchronise, thus ensuring the perfect completion of the operations from the gripping of the sections on the transferring unit up to the delivery of said sections to the storage bag for the formation of the package.

The elements and characteristics illustrated in the different preferred embodiments may be combined without however going beyond the scope of protection of the present invention.

## Claims

1. A stacking machine for forming packages of longitudinal metal sections, the machine comprising:
- a transferring unit (11), defining a feed direction (2) of the sections,
- a gripping station of the sections arranged on said transferring unit (11),
- the transferring unit being adapted to convey at least one layer of said sections, arranged transversally to the feed direction (2), to the gripping station;
- a delivery station of the sections, arranged at a first end (3) of said transferring unit (11) and accommodating the sections transversally to the feed direction (2),
- a plurality of arms (12), suitable to rotate about a first rotation axis transversal to said feed direction (2),
- a plurality of magnetic gripping means (13), each being rotationally fixed to one of said plurality of arms (12), said magnetic gripping means (13) being suitable to rotate about a second rotation axis, transversal to said feed direction (2), to magnetically grip said at least one layer of sections from said gripping station and to transfer said at least one layer of sections to the delivery station of the sections, wherein only two control means are provided for controlling the arms (12) and the magnetic gripping means (13) from said gripping station to said delivery station to reach a depositing position (212, 313) of said at least one layer, and vice versa, wherein a first control means of said two control means is configured to control a respective rotation of the plurality of arms (12) in only one sense of rotation during machine operation,
wherein a second control means of said two control means is configured to control respective rotations of the plurality of magnetic gripping means (13), said respective rotations occurring alternatively in a first sense of rotation and in a second sense of rotation reversed with respect to the first sense of rotation, wherein the arms (12) are integrally mounted onto a first single transmission shaft (20) defining said first rotation axis,
wherein said first control means control the actuation of said first transmission shaft (20),
**characterised in that** said second control means control the actuation of a second transmission shaft (24) positioned outside the radius of action of the arms (12) and of the magnetic gripping means (13),
**in that** the magnetic gripping means (13) are integrally mounted onto respective rotating axles (25), positioned transversally on the arms (12) and defining said second rotation axis,
and **in that** connection kinematics are provided between the second transmission shaft (24) and each rotating axle (25).

2. A stacking machine according to claim 1, wherein the distance between said first rotation axis and said first end (3) of the transferring unit (11) is substantially equal to the longitudinal extension of said plurality of arms (12).

3. A stacking machine according to claim 1, wherein the first transmission shaft (20) is positioned below a section feed plane of the transferring unit (11) and is arranged in an intermediate position between the first end (3) and a second end of the transferring unit (11).

4. A stacking machine according to any one of the preceding claims, wherein said first control means comprise an electric or hydraulic motor, and wherein said second control means comprise an electric or hydraulic motor, or a Cardan shaft actuated in turn by a further motor either via direct drive or by means of a connecting rod/crank type mechanism.

5. A stacking machine according to any one of the preceding claims, wherein the arms (12) have a longitudinal substantially L-formed shape and the magnetic gripping arms (13) are rotationally fixed at the short end of the L shape.

6. A stacking machine according to claim 1, wherein said connection kinematics comprise:
- a crank (23) integrally mounted onto the second transmission shaft (24);
- a rod (22) connected by a first end thereof to the crank (23);
- a lever (31) connected by a first end thereof to a second end of the rod (22) and provided at a second end thereof with a circular sector shaped element (30);
- a gearing comprising a predetermined number of idle toothed wheels (50, 51, 52, 53, 54) provided on each of said plurality of arms (12), wherein a first toothed wheel (50) is idly centered on the first transmission shaft (20) and meshes with a toothed periphery of the circular sector shaped element (30), while a last toothed wheel (54) is integrally centered on the rotating axle (25); or chain or toothed belt transmission means (70) meshing with a toothed periphery of the circular sector shaped element (30) for transmitting a motion directly between first pulleys (71), idly centered on the first transmission shaft (20), and second pulleys (72) integrally mounted onto the rotating axles (25).

7. A stacking machine according to claim 6, wherein a transmission ratio higher than 1 is provided between the circular sector shaped element (30) and the first toothed wheel (50).

8. A stacking machine according to claim 1, wherein said connection kinematics comprise first chains or toothed belts (60) for transmitting motion directly from a series of first pulleys (61), integrally centered on the second transmission shaft (24), to
- respective first idle toothed wheels (50) of a gearing comprising a predetermined number of idle toothed wheels (50, 51, 52, 53, 54) provided on each arm (12), wherein the first toothed wheel (50) is idly centered on the first transmission shaft (20), while a last toothed wheel (54) is integrally centered on the rotating axle (25); or
- to second pulleys (71), idly centered on the first transmission shaft (20), on which there are provided transmission means with second chains or toothed belts (70) for transmitting motion directly between said second pulleys (71) and third pulleys (72) integrally mounted onto the rotating axles (25).

9. A stacking machine according to claim 6 or 8, wherein a transmission ratio of said gearing or of said chain or toothed belt transmission means (70) equal to 1 is provided.

10. A stacking machine according to claim 5, wherein at said gripping station, the shorter segment of the L shape of the arms (12) protrudes from the feed plane of the transferring unit (11) in proximity of an intermediate zone between first separator stops (18'), adapted to stop a first layer (17) of sections on said feed plane, and second separator stops (18), adapted to stop a second layer (16) of sections on said feed plane, so as not to interfere with said first layer and second layer.

11. A process for forming a package of metal longitudinal section layers, carried out by means of a stacking machine according to any one of claims from 1 to 10, comprising the following steps:
a) arranging at least one layer of sections at said gripping station;
b) arranging the plurality of longitudinal arms (12) in a substantially horizontal position (112) and the plurality of magnetic gripping means (13) with respective electromagnets (13') facing upwards in a substantially horizontal position thereof (113) under said at least one layer of sections;
c) carrying out a first rotation by approximately 180° of the magnetic gripping means (13) in a first sense of rotation, by means of a control imparted by the second control means, for magnetically picking said at least one layer of sections from said gripping station and positioning the respective electromagnets (13') facing downwards;
d) transmitting a first rotation by approximately 180° in a first sense of rotation to the arms (12) by means of a control imparted by the first control means for transferring said at least one layer of sections from said gripping station to said delivery station;
e) depositing said at least one layer of sections in an storage bag (4) of said delivery station;
f) transmitting a second rotation by approximately 180° in a second sense of rotation, opposite to the first sense of rotation, to the magnetic gripping means (13), by means of a control imparted by the second control means, for extracting said magnetic gripping means (13) from the storage bag (4) and repositioning the electromagnets (13') facing upwards;
g) transmitting a second rotation by approximately 180° in said first sense of rotation to the arms (12) by means of a control imparted by the first control means for repositioning the plurality of the longitudinal arms (12) in their substantially horizontal position (112) and the plurality of magnetic gripping means (13) with the respective electromagnets (13') in their first substantially horizontal position (113) underneath a further at least one layer of sections to be stacked.

## Patentansprüche

1. Stapelmaschine zum Bilden von Paketen aus länglichen Metallprofilen, wobei die Maschine umfasst:
- eine Überführungseinheit (11), die eine Vorschubrichtung (2) der Profile definiert,
- eine Greifstation der Profile, die an der Überführungseinheit (11) angeordnet ist,
- wobei die Überführungseinheit ausgebildet ist, um zumindest eine Lage der Profile, die quer zu der Vorschubrichtung (2) angeordnet sind, zu der Greifstation zu befördern;
- eine Abgabestation der Profile, die an einem ersten Ende (3) der Überführungseinheit (11) angeordnet ist und die Profile quer zu der Vorschubrichtung (2) aufnimmt,
- eine Mehrzahl von Armen (12), die geeignet sind, um eine erste Drehachse quer zu der Vorschubrichtung (2) zu rotieren,
- eine Mehrzahl von magnetischen Greifmitteln (13), die jeweils rotatorisch an einem der Mehrzahl von Armen (12) befestigt sind, wobei die magnetischen Greifmittel (13) geeignet sind, um eine zweite Drehachse quer zu der Vorschubrichtung (2) zu rotieren, um die zumindest eine Lage aus Profilen von der Greifstation magnetisch zu greifen und um die zumindest eine Lage von Profilen zu der Abgabestation der Profile zu überführen, wobei nur zwei Steuerungsmittel zum Steuern der Arme (12) und der magnetischen Greifmittel (13) von der Greifstation zu der Abgabestation vorgesehen sind, um eine Abgabeposition (212, 213) der zumindest einen Lage zu erreichen, und umgekehrt,
wobei ein erstes Steuerungsmittel der zwei Steuerungsmittel ausgestaltet ist, um eine jeweilige Drehung der Mehrzahl von Armen (12) während des Maschinenbetriebs in nur einer Drehrichtung zu steuern,
wobei ein zweites Steuerungsmittel der zwei Steuerungsmittel ausgestaltet ist, um jeweilige Drehungen der Mehrzahl von magnetischen Greifmitteln (13) zu steuern, wobei die jeweiligen Drehungen abwechselnd in einer ersten Drehrichtung und in einer zweiten Drehrichtung, die mit Bezug auf die erste Drehrichtung umgekehrt ist, erfolgen,
wobei die Arme (12) einstückig an einer ersten einzelnen Übertragungswelle (20), die die erste Drehachse definiert, montiert sind, wobei die ersten Steuerungsmittel die Betätigung der ersten Übertragungswelle (20) steuern,
**dadurch gekennzeichnet, dass**
die zweiten Steuerungsmittel die Betätigung der zweiten Übertragungswelle (24), die außerhalb des Wirkradius der Arme (12) und der magnetischen Greifmittel (13) angeordnet ist, steuern,
dass die magnetischen Greifmittel (13) einstückig an jeweiligen Drehachsen (25), die quer an den Armen (12) angeordnet sind und die zweite Drehachse definieren, montiert sind,
und dass eine Verbindungskinematik zwischen der zweiten Übertragungswelle (24) und jeder Drehachse (25) vorgesehen ist.

2. Stapelmaschine nach Anspruch 1,
wobei der Abstand zwischen der ersten Drehachse und dem ersten Ende (3) der Überführungseinheit (11) im Wesentlichen gleich der Längsausdehnung der Mehrzahl von Armen (12) ist.

3. Stapelmaschine nach Anspruch 1,
wobei die erste Übertragungswelle (20) unterhalb einer Profilvorschubebene der Überführungseinheit (11) positioniert und in einer Zwischenposition zwischen dem ersten Ende (3) und einem zweiten Ende der Überführungseinheit (11) angeordnet ist.

4. Stapelmaschine nach einem der vorhergehenden Ansprüche,
wobei die ersten Steuerungsmittel einen elektrischen oder hydraulischen Motor umfassen, und wobei die zweiten Steuerungsmittel einen elektrischen oder hydraulischen Motor oder eine Kardanwelle umfassen, die wiederum durch einen weiteren Motor entweder über Direktantrieb oder mittels eines Mechanismus vom Pleuel/Kurbel-Typ betätigt wird.

5. Stapelmaschine nach einem der vorhergehenden Ansprüche,
wobei die Arme (12) in Längsrichtung im Wesentlichen eine L-Form aufweisen und die magnetischen Greifarme (13) rotatorisch an dem kurzen Ende der L-Form befestigt sind.

6. Stapel maschine nach Anspruch 1,
wobei die Verbindungskinematik umfasst:
- eine Kurbel (23), die einstückig an der zweiten Übertragungswelle (24) montiert ist;
- einen Stab (22), der über ein erstes Ende davon mit der Kurbel (23) verbunden ist;
- einen Hebel (31), der über ein erstes Ende davon mit einem zweiten Ende des Stabes (22) verbunden ist und an einem zweiten Ende davon mit einem kreissektorförmigen Element (30) versehen ist;
- ein Getriebe, das eine vorbestimmte Zahl von Zwischenzahnrädern (50, 51, 52, 53, 54) umfasst, die an einem jeden der Mehrzahl von Armen (12) vorgesehen sind, wobei ein erstes Zahnrad (50) lose auf der ersten Übertragungswelle (20) zentriert ist und mit einem verzahnten Umfang des kreissektorförmigen Elements (30) kämmt, während ein letztes Zahnrad (54) einstückig auf der Drehachse (25) zentriert ist; oder Ketten- oder Zahnriemenübertragungsmittel (70), die mit einem verzahnten Umfang des kreissektorförmigen Elements (30) kämmen, um eine Bewegung direkt zwischen ersten Scheiben (71), die lose auf der ersten Übertragungswelle (20) zentriert ist, und zweiten Scheiben (72), die einstückig auf den Drehachsen (25) montiert sind, zu übertragen.

7. Stapelmaschine nach Anspruch 6,
wobei ein Übersetzungsverhältnis, das höher als 1 ist, zwischen dem kreissektorförmigen Element (30) und dem Zahnrad (50) vorgesehen ist.

8. Stapel maschine nach Anspruch 1,
wobei die Verbindungskinematik erste Ketten oder Zahnriemen (60) umfasst, um eine Bewegung direkt von einer Reihe von ersten Scheiben (61), die einstückig auf der zweiten Übertragungswelle (24) zentriert sind, zu übertragen auf
- jeweilige erste Zwischenzahnräder (50) eines Getriebes, das eine vorbestimmte Zahl von Zwischenzahnrädern (50, 51, 52, 53, 54) umfasst, die an jedem Arm (12) vorgesehen sind, wobei das erste Zahnrad (50) lose auf der ersten Übertragungswelle (20) zentriert ist, während ein letztes Zahnrad (54) einstückig auf der Drehachse (25) zentriert ist; oder
- auf zweite Scheiben (71), die lose auf der ersten Übertragungswelle (20) zentriert sind, auf denen Übertragungsmittel mit zweiten Ketten oder Zahnriemen (70) vorgesehen sind, um eine Bewegung direkt zwischen den zweiten Scheiben (71) und dritten Scheiben (72), die einstückig auf den Drehachsen (25) montiert sind, zu übertragen.

9. Stapelmaschine nach Anspruch 6 oder 8,
wobei ein Übersetzungsverhältnis von dem Getriebe oder von dem Kettenoder Zahnriemenübertragungsmittel (70) gleich 1 vorgesehen ist.

10. Stapelmaschine nach Anspruch 5,
wobei an der Greifstation das kürzere Segment der L-Form der Arme (12) von der Vorschubebene der Überführungseinheit (11) in der Nähe einer Zwischenzone zwischen ersten Trennungsanschlägen (18'), die ausgebildet sind, um eine erste Lage (17) von Profilen auf der Vorschubebene zu stoppen, und zweiten Trennungsanschlägen (18), die ausgebildet sind, um eine zweite Lage (16) von Profilen auf der Vorschubebene zu stoppen, um die erste Lage und die zweite Lage nicht zu behindern, vorsteht.

11. Verfahren zum Bilden eines Pakets aus länglichen Metallprofillagen, das mittels einer Stapelmaschine nach einem der Ansprüche 1 bis 10 ausgeführt wird und die folgenden Schritte umfasst:
a) Anordnen zumindest einer Lage von Profilen an der Greifstation;
b) Anordnen der Mehrzahl von Längsarmen (12) in einer im Wesentlichen horizontalen Position (112) und der Mehrzahl von magnetischen Greifmitteln (13) mit jeweiligen Elektromagneten (13') in einer im Wesentlichen horizontalen Position davon nach oben weisend (113) unter der zumindest einen Lage von Profilen;
c) Ausführen einer ersten Drehung um annähernd 180° der magnetischen Greifmittel (13) in einer ersten Drehrichtung mittels einer Steuerung, die durch die zweiten Steuerungsmittel ausgeübt wird, um die zumindest eine Lage von Profilen von der Greifstation magnetisch aufzunehmen und die jeweiligen Elektromagnete (13') nach unten weisend zu positionieren;
d) Übertragen einer ersten Drehung um annähernd 180° in einer ersten Drehrichtung auf die Arme (12) mittels einer Steuerung, die durch die ersten Steuerungsmittel ausgeübt wird, um die zumindest eine Lage von Profilen von der Greifstation zu der Abgabestation zu überführen;
e) Ablegen der ersten Lage von Profilen in einer Aufbewahrungstasche (4) der Abgabestation;
f) Übertragen einer zweiten Drehung um annähernd 180° in einer zweiten Drehrichtung, die entgegengesetzt zu der ersten Drehrichtung ist, auf die magnetischen Greifmittel (13) mittels einer Steuerung, die durch die zweiten Steuerungsmittel ausgeübt wird, um die magnetischen Greifmittel (13) aus der Aufbewahrungstasche (4) herauszuziehen und die Elektromagnete (13') nach oben weisend umzupositionieren;
g) Übertragen einer zweiten Drehung um annähernd 180° in der ersten Drehrichtung auf die Arme (12) mittels einer Steuerung, die durch die ersten Steuerungsmittel ausgeübt wird, um die Mehrzahl der Längsarme (12) in ihre im Wesentlichen horizontale Position (112) und die Mehrzahl von magnetischen Greifmitteln (13) mit den jeweiligen Elektromagneten (13') in ihrer ersten im Wesentlichen horizontalen Position (113) unterhalb einer weiteren zumindest einen zu stapelnden Lage von Profilen umzupositionieren.

## Revendications

1. Machine d'empilement pour former des paquets de profilés métalliques longitudinaux, la machine comprenant :
- une unité de transfert (11), définissant une direction d'amenée (2) des profilés,
- une station de préhension des profilés agencée sur ladite unité de transfert (11),
- l'unité de transfert étant adaptée pour acheminer au moins une couche desdits profilés, agencée transversalement à la direction d'amenée (2), à la station de préhension ;
- une station de distribution des profilés, agencée au niveau d'une première extrémité (3) de ladite unité de transfert (11) et accueillant les profilés transversalement à la direction d'amenée (2),
- une pluralité de bras (12), appropriée pour tourner autour d'un premier axe de rotation transversal à ladite direction d'amenée (2),
- une pluralité de moyens de préhension magnétiques (13), chacun étant fixé en rotation à l'un de ladite pluralité de bras (12), lesdits moyens de préhension magnétiques (13) étant appropriés pour tourner autour d'un second axe de rotation, transversal à ladite direction d'amenée (2), pour saisir magnétiquement ladite au moins une couche de profilés depuis ladite station de préhension et pour transférer ladite au moins une couche de profilés à ladite station de distribution des profilés,
dans laquelle uniquement deux moyens de commande sont prévus pour commander les bras (12) et les moyens de préhension magnétiques (13) depuis ladite station de préhension à ladite station de distribution pour atteindre une position de dépôt (212, 313) de ladite au moins une couche, et vice versa,
dans laquelle un premier moyen de commande desdits deux moyens de commande est configuré pour commander une rotation respective de la pluralité de bras (12) dans uniquement un sens de rotation pendant le fonctionnement de la machine,
dans laquelle un second moyen de commande desdits deux moyens de commande est configuré pour commander des rotations respectives de la pluralité de moyens de préhension magnétiques (13), lesdites rotations respectives se produisant en alternance dans un premier sens de rotation et dans un second sens de rotation inversé par rapport au premier sens de rotation,
dans laquelle les bras (12) sont montés solidairement sur un premier arbre de transmission unique (20) définissant ledit premier axe de rotation,
dans laquelle ledit premier moyen de commande commande l'actionnement dudit premier arbre de transmission (20),
**caractérisée en ce que** ledit second moyen de commande commande l'actionnement d'un second arbre de transmission (24) positionné à l'extérieur du rayon d'action des bras (12) et des moyens de préhension magnétiques (13),
**en ce que** les moyens de préhension magnétiques (13) sont montés solidairement sur des essieux rotatifs (25) respectifs, positionnés transversalement sur les bras (12) et définissant ledit second axe de rotation,
et **en ce que** des cinématiques de raccordement sont prévues entre le second arbre de transmission (24) et chaque essieu rotatif (25).

2. Machine d'empilement selon la revendication 1, dans laquelle la distance entre ledit premier axe de rotation et ladite première extrémité (3) de l'unité de transfert (11) est sensiblement égale à l'extension longitudinale de ladite pluralité de bras (12).

3. Machine d'empilement selon la revendication 1, dans laquelle le premier arbre de transmission (20) est positionné en dessous d'un plan d'amenée de profilés de l'unité de transfert (11) et est agencé en une position intermédiaire entre la première extrémité (3) et une seconde extrémité de l'unité de transfert (11).

4. Machine d'empilement selon l'une quelconque des revendications précédentes, dans laquelle ledit premier moyen de commande comprend un moteur électrique ou hydraulique, et dans laquelle ledit second moyen de commande comprend un moteur électrique ou hydraulique, ou un arbre à cardan actionné à son tour par un autre moteur soit par entraînement direct soit au moyen d'un mécanisme de type bielle/manivelle.

5. Machine d'empilement selon l'une quelconque des revendications précédentes, dans laquelle les bras (12) ont une forme longitudinale sensiblement en L et les bras de préhension magnétiques (13) sont fixés en rotation au niveau de l'extrémité courte de la forme en L.

6. Machine d'empilement selon la revendication 1, dans laquelle lesdites cinématiques de raccordement comprennent :
- une manivelle (23) montée solidairement sur le second arbre de transmission (24) ;
- une bielle (22) raccordée par une première extrémité de celle-ci à la manivelle (23) ;
- un levier (31) raccordé par une première extrémité de celui-ci à une seconde extrémité de la bielle (22) et pourvu au niveau d'une seconde extrémité de celui-ci d'un élément en forme de secteur circulaire (30) ;
- un engrenage comprenant un nombre prédéterminé de roues dentées folles (50, 51, 52, 53, 54) prévues sur chacun de ladite pluralité de bras (12), dans laquelle une première roue dentée (50) est centrée passivement sur le premier arbre de transmission (20) et s'engrène avec une périphérie dentée de l'élément en forme de secteur circulaire (30), tandis qu'une dernière roue dentée (54) est centrée solidairement sur l'essieu rotatif (25) ; ou un moyen de transmission à chaîne ou à courroie dentée (70) s'engrenant avec une périphérie dentée de l'élément en forme de secteur circulaire (30) pour transmettre un mouvement directement entre des premières poulies (71), centrées passivement sur le premier arbre de transmission (20), et des deuxièmes poulies (72) montées solidairement sur les essieux rotatifs (25).

7. Machine d'empilement selon la revendication 6, dans laquelle un rapport de transmission supérieur à 1 est prévu entre l'élément en forme de secteur circulaire (30) et la première roue dentée (50).

8. Machine d'empilement selon la revendication 1, dans laquelle lesdites cinématiques de raccordement comprennent des premières chaînes ou courroies dentées (60) pour transmettre un mouvement directement depuis une série de premières poulies (61), centrées solidairement sur le second arbre de transmission (24), à
- des premières roues dentées folles (50) respectives d'un engrenage comprenant un nombre prédéterminé de roues dentées folles (50, 51, 52, 53, 54) prévues sur chaque bras (12), dans laquelle la première roue dentée (50) est centrée passivement sur le premier arbre de transmission (20), tandis qu'une dernière roue dentée (54) est centrée solidairement sur l'essieu rotatif (25) ; ou
- à des deuxièmes poulies (71), centrées passivement sur le premier arbre de transmission (20), sur lequel sont prévus des moyens de transmission avec des secondes chaînes ou courroies dentées (70) pour transmettre un mouvement directement entre lesdites deuxièmes poulies (71) et des troisièmes poulies (72) montées solidairement sur les essieux rotatifs (25).

9. Machine d'empilement selon la revendication 6 ou 8, dans laquelle un rapport de transmission dudit engrenage ou dudit moyen de transmission à chaîne ou à courroie dentée (70) égal à 1 est prévu.

10. Machine d'empilement selon la revendication 5, dans laquelle au niveau de ladite station de préhension, le segment plus court de la forme en L des bras (12) dépasse du plan d'amenée de l'unité de transfert (11) à proximité d'une zone intermédiaire entre des premières butées de séparation (18'), adaptées pour arrêter une première couche (17) de profilés sur ledit plan d'amenée, et des secondes butées de séparation (18), adaptées pour arrêter une seconde couche (16) de profilés sur ledit plan d'amenée, de façon à ne pas interférer avec ladite première couche et ladite seconde couche.

11. Procédé de formation d'un paquet de couches de profilés longitudinaux métalliques, réalisé au moyen d'une machine d'empilement selon l'une quelconque des revendications 1 à 10, comprenant les étapes suivantes :
a) agencement d'au moins une couche de profilés au niveau de ladite station de préhension ;
b) agencement de la pluralité de bras longitudinaux (12) en une position sensiblement horizontale (112) et de la pluralité de moyens de préhension magnétiques (13) avec des électroaimants (13') respectifs orientés vers le haut en une position sensiblement horizontale de ceux-ci (113) sous ladite au moins une couche de profilés ;
c) réalisation d'une première rotation d'approximativement 180 ° des moyens de préhension magnétiques (13) dans un premier sens de rotation, au moyen d'une commande communiquée par le second moyen de commande, pour prélever magnétiquement ladite au moins une couche de profilés depuis ladite station de préhension et positionner les électroaimants (13') respectifs orientés vers le bas ;
d) transmission d'une première rotation d'approximativement 180 ° dans un premier sens de rotation aux bras (12) au moyen d'une commande communiquée par le premier moyen de commande pour transférer ladite au moins une couche de profilés depuis ladite station de préhension à ladite station de distribution ;
e) dépôt de ladite au moins une couche de profilés dans un sac de stockage (4) de ladite station de distribution ;
f) transmission d'une seconde rotation d'approximativement 180 ° dans un second sens de rotation, opposé au premier sens de rotation, aux moyens de préhension magnétiques (13), au moyen d'une commande communiquée par le second moyen de commande, pour extraire lesdits moyens de préhension magnétiques (13) du sac de stockage (4) et repositionner les électroaimants (13') orientés vers le haut ;
g) transmission d'une seconde rotation d'approximativement 180 ° dans ledit premier sens de rotation aux bras (12) au moyen d'une commande communiquée par le premier moyen de commande pour repositionner la pluralité des bras longitudinaux (12) dans leur position sensiblement horizontale (112) et la pluralité de moyens de préhension magnétiques (13) avec les électroaimants (13') respectifs dans leur première position sensiblement horizontale (113) en dessous d'au moins une couche supplémentaire de profilés à empiler.
